# DEMANDE DE BREVET EUROPEEN

(11) **EP 1 253 178 A1**
(43) Date de publication de la demande: **30.10.2002**
(21) Numéro de dépôt: 01109290.5
(22) Date de dépôt: 17.04.2001
(51) Int. Cl.: C09K 3/18, C09K 17/36

(54) **Composition aqueuse pour l'hydrophobation d'un substrat**

(71) Demandeur: Vionnet, Jacques, 1234 Vessy (CH)
(72) Inventeur: Hirsbrunner, Pierre, 1802 Corseaux (CH); Horman, Ian, 1807 Blonay (CH)

(57) **Abrégé**

La présente invention concerne une composition aqueuse pour le traitement d'un substrat de manière à le rendre hydrophobe, comprenant un méthylsiliconate de sodium ou de potassium et un silicate de sodium ou de potassium. L'invention concerne en outre l'utilisation de cette composition pour le traitement hydrophobe d'un substrat.

## Description

La présente invention concerne une composition aqueuse pour l'hydrophobation d'un substrat, ainsi que l'utilisation de ladite composition et un procédé d' hydrophobation dudit substrat.

Il est bien connu que l'usage d'agents hydrophobes appliqués sur un sol aride permet une importante économie d'eau, la surface traitée présentant une barrière efficace contre l'évaporation d'eau d'irrigation. Le brevet EP 889'109 concerne l'utilisation de méthylsiliconates de sodium ou de potassium pour rendre un substrat hydrophobe. Ce procédé présente néanmoins deux inconvénients. D'une part, la quantité d'eau d'application pour traiter une surface donnée est trop élevée (de l'ordre de 10 à 20 m³/hectare) et le coût des méthylsiliconates est élevé, limitant l'application du procédé pour de nombreux cas.

La présente invention concerne une composition permettant de réduire la quantité d'eau d'application sur le substrat et d'en réduire le coût.

La présente invention concerne une composition aqueuse pour le traitement d'un substrat de manière à le rendre hydrophobe, comprenant un méthylsiliconate de sodium ou de potassium et un silicate de sodium ou de potassium.

Il a été constaté de façon surprenante, que les silicates contribuent de manière très efficace à augmenter le pouvoir hydrophobant du méthylsiliconate. En tant que tel, ils n'ont aucun pouvoir hydophobant, même appliqués en grande quantité, mais associés à l'agent hydrophobant, à savoir le méthylsiliconate, ils en doublent l'efficacité. Celà signifie qu'avec une quantité de 50% du méthylsiliconate, on obtient le même pouvoir hydrophobant qu'avec cet agent seul, lorsqu'on ajoute le silicate à raison de 2 à 3 moles pour 1 mole de méthylsiliconate. La composition aqueuse selon l'invention contient une quantité de silicate par rapport au siliconate dans un rapport molaire compris entre 0,5 et 10. On a de préférence une composition contenant 2 ou 3 moles de silicate pour une mole de siliconate. Si on envisage la composition aqueuse selon l'invention sur une base de concentration, celle-ci contient de préférence entre 0,01 et 1 % de méthylsiliconate de sodium ou de potassium et entre 0,01 et 5 % de silicate de sodium ou de potassium. Les pourcentages dans la présente description sont donnés en poids. Sur le plan molaire, par une mole de silicate, on entend une mole équivalent de SiO₂.

Le silicate utilisé peut être tout silicate hydrosoluble. On utilise de préférence de l'ortho- ou du meta-silicate.

De façon surprenante aussi, il a été constaté que l'usage du mélange siliconate/silicate mentionné provoque, à épaisseur de traitement hydrophobant égale, une protection contre l'évaporation du double du traitement hydrophobant induit par le méthylsiliconate seul. Ce phénomène s'explique par le fait que le silicate, lorsque exposé à l'air ambiant, se transforme en acide silicique (gel de silice) lequel contribue notablement, en co-application avec le méthylsiliconate, à l'effet recherché de réduction d'évaporation par empêchement stérique.

Le remplacement d'une partie importante de méthylsiliconate coûteux par le silicate permet de réduire la quantité d'eau d'application du facteur 2 et la quantité du réactif hydrophobant du facteur 4, ceci pour l'obtention d'un traitement protecteur identique. Le coût du traitement se trouve ainsi diminué de l'ordre d'un facteur 3 à 4. En plus, le traitement est facilité par la diminution remarquable du volume à appliquer.

L'usage des silicates en Génie Civil est connu de longue date. En effet, ils sont utilisés pour le renforcement des ouvrages d'art, tels tunnels, mines et forages ainsi que pour protéger les surfaces de maçonnerie, ignifuger les matériaux inflammables ainsi que pour le traitement de l'eau et dans l'industrie papetière. L'industrie du pétrole brut en fait un usage de plus en plus important. Son coût n'est qu'une petite fraction de celui des organosiliconates.
(cf. Encycl. of Chem. Technol. Ullmann Vol. A23 pp 711-715 et Kirk-Othmer 22, pp 12-25.)

La composition selon l'invention comprend en outre un colorant et/ou un principe agrochimique, dans des concentrations usuelles pour l'homme de métier. Par principe agrochimique, on entend dans la présente description un composé choisi dans le groupe constitué par un herbicide, un insecticide, un pesticide, un antifongique ou un agent répulsif.

La présente invention concerne également l'utilisation de la composition pour le traitement hydrophobe d'un substrat par mélange, par trempage, par sprayage ou par arrosage.

L'invention concerne finalement le procédé d' hydrophobation d'un substrat choisi dans le groupe constitué par le sable, le gravier, l'écorce d'arbre, la sciure , le compost, le terreau et un matériau solide , dans lequel on applique la composition décrite ci-dessus soit directement sur le substrat, soit indirectement en prétraitant ledit substrat qui sera ensuite déposé sur le sol à traiter.

Dans le cas du procédé par application directe sur le sol, on applique entre 2 et 60 kg de méthylsiliconate de Na ou K et entre 2 et 150 kg de silicate de Na ou K par hectare de sol.

Dans le cas du prétraitement, on trempe ou on spraye le substrat avec une solution contenant entre 0,01 et 1 % de méthylsiliconate de Na ou K et entre 0,01 et 5 % de silicate de Na ou K. Ce type de prétraitement peut aussi bien être envisagé sur des substrats classiques , comme le gravier ou terreau que sur des matériaux solides comme des dalles, des pots de fleurs ou des pots en grès.

### EXEMPLES

### 1. Effet synergique silicate/siliconate sur l'hydrophobicité

### Méthode de test:

On traite un échantillon de sable référence par une série de réactifs pris seuls ou en combinaison de façon isotrope et après réaction on évalue l'hydrophobicité induite. Ainsi, 100 ml de sable sont imbibés de façon homogène par 20 ml d'eau contenant une quantité définie de méthylsiliconate de K industriel à 28% de RHODIA (GSP) et/ou de silicate de Na technique (SI), waterglass de Riedel-deHaën, à 28% équivalent en SiO₂. Après mélange, on dispose l'échantillon de sable traité à l'étuve (60°C/12h) et l'on teste après la réaction la propriété d'imperméabilité de l'eau sur la croûte et dans la masse homogène avec la technique de la 'goutte d'eau".

**TABLEAU 1**

| **TRAITEMENT D'HYDROPHOBATION** | | | | |
|---|---|---|---|---|
| Induction d'hydrophobicité par le méthylsiliconate de K industriel (GSP) et le silicate de Na technique(SI) décrit ci-dessus sur le sable | | | | |

| ESSAI | GSP | SI | HYDROPHOBICITE*) | |
|---|---|---|---|---|
| | ppm | ppm | a) croûte | b) homogène |
| A | - | 10'000 | - | - |
| B | 1200 | - | + | +/- |
| 1.0 | 800 | - | +/- | - |
| 1.1 | 800 | 1200 | + | + |
| 1.2 | 800 | 800 | + | + |
| 1.3 | 800 | 600 | + | + |
| 2.0 | 600 | - | - | - |
| 2.1 | 600 | 1200 | + | +/- |
| 2.2 | 600 | 800 | + | +/- |
| 2.3 | 600 | 600 | +/- | - |

| | | | | |
|---|---|---|---|---|
| *) Test d'hydrophobicité: | | | | |
| + = imperméabilité à l'eau > 1 min ; | | | | |
| +/- = imperméabilité à l'eau observable pendant 2-30 secondes; | | | | |
| - = aucune imperméabilité | | | | |

Pour passer des ppm à la concentration en %, il faut diviser par 10000

### Evaluation:

- On constate que le SI seul n'a aucun effet, même à 10'000 ppm (essai A).
- Le GSP à 1200 ppm est limite en système homogène, suffisant en croûte (essai B)a)
- Le GSP à 800ppm est insuffisant pour assurer l'hydrophobicité (essai 1.0).
   Par contre, lorsque 600ppm de SI est ajouté aux 800ppm de GSP, on observe une hydrophobicité totale (essai 1.3)
- Avec 600ppm GSP - quantité nettement insuffisante pour le siliconate seul - on obtient l'hydrophobicité sur la croûte déjà avec un rajoût de 600 ppm de SI (essai 2.3). Avec un rajout de 800ppm de SI, le matériau non homogénéisé est parfaitement hydrophobe.

### Conclusion:

L'adjonction d'une quantité équivalente en ppm de SI permet une réduction de l'ordre de 50% de la quantité minimale de GSP à engager pour assurer une hydrophobicité opérationelle.
Ceci représente une proportion molaire de l'ordre de 1 siliconate / 2 silicate.

### 2. Effet de l'adjonction de silicate au siliconate pour la rétention d'eau

### Méthode de test:

Une solution contenant ces deux réactifs en différentes proportions est appliquée sur du sable par aspersion homogène sur une surface de 1 m², sous laquelle sont disposés des récipients cylindriques de 9cm de diamètre et 5cm de profondeur chargés de 300ml de sable référence. La surface est traitée par aspersion à raison de 0,25 L/m2, 0,5 L/m2 et 1 L/m2 des solutions tests telles décrites dans le Tableau 2. Après séchage à l'étuve 60°C / 12h, 50,0 ml d'eau sont injectés sous la surface traitée à l'aide d'une seringue.

**TABLEAU 2**

| **CINETIQUE D'EVAPORATION** | | | | | | | |
|---|---|---|---|---|---|---|---|
| Sable traité avec silicate (SI) et siliconate (GSP), décrit ci-dessus, en mélange molaire de l'ordre de 2 : 1. Conditions: Etuve 60°C / ventilation, départ tempéré 60°C. | | | | | | | |
| Les quantité de réactifs sont données en % par rapport au produit technique, c'est-à-dire que une concentration de 1 % GSP qui contient 28 % de methylsiliconate correspond à une concentration de 0,28 % de méthylsiliconate. | | | | | | | |
| Les résultats du tableau correspondent à une perte d'eau calculée en % par heure | | | | | | | |

| No | TRAITEMENT | 0-1h | 1-3h | 3-5h | 5-8h | 8-24h | Reste |
|---|---|---|---|---|---|---|---|
| | | | | | | | |
| NTa | Sable référence / Sans traitement | 25.2 | 17.1 | 8.3 | 3.1 | 0,92 | <1 |
| NTb | Répétition | 26.1 | 17.1 | 8.6 | 2.5 | 0.93 | <1 |
| | | | | | | | |
| 1a | GSP 1% à 1L/m2 | 2.9 | 2.8 | 3.1 | 2.9 | 2.9 | 33% |
| 1b | Répétition | 3.9 | 3.7 | 3.9 | 3.2 | 2.9 | 25% |
| | | | | | | | |
| 2a | GSP 1% à 0,5 L/m2 | 4.6 | 4.3 | 4.5 | 3.8 | 3.3 | 14% |
| 2b | Répétition | 4.5 | 3.8 | 4.7 | 3.8 | 3.5 | 11% |
| | | | | | | | |
| 3a | GSP 0,4% + SI 0,4% à 0.5L/m2 | 3.3 | 3.1 | 3.5 | 2.8 | 3,0 | 27% |
| 3b | Répétition | 3.8 | 3.4 | 3.8 | 3.5 | 3.3 | 10% |
| | | | | | | | |
| 4a | GSP 0,4% + SI 0,4% à 0,25L/m2 | 4.8 | 4.2 | 4.3 | 4.2 | 3.4 | 11% |
| 4b | Répétition | 5,0 | 4.6 | 4.7 | 4.7 | 3.4 | 8% |
| | | | | | | | |

1. Le silicate ajouté à raison de 2 molécules pour 1 molécule de siliconate permet de réduire la quantité de siliconate d'au moins de 50% (comparer les essais 2 et 3). En d'autres termes, on peut utiliser le mélange 0,5 vol de siliconate industriel à 28 % + 0,5 vol de silicate technique 28% équivalent en SiO2 pour un effet similaire - sinon supérieur - à 1 vol de siliconate industriel seul.
2. L'usage de 0,5 L/m2 du mélange SI à 0,4%+ GSP à 0,4 % présente le même effet à l'application que 1 L/m2 d'une solution de 1% de GSP (comparer les essais 1 et 3). En termes pratiques, celà signifie que le volume d'eau d'application peut être réduit du facteur 2, sans perdre pour autant de l'efficacité protectrice, c.-à.-d. d'appliquer 5 m3 par ha au lieu des 10 m3 par ha nécessaires avec une solution de 1% GSP seul.
3. L'usage de 0,25 L/m2 du mélange SI 0,4% + GSP 0,4% présente déjà un traitement très efficace. Si l'on compare le traitement No 1 - où l'on asperge 100L GSP seul dilué dans 10 m³ par ha - avec les quantités de l'essai No 4, où l'on asperge seulement 10L GSP dans 2,5m³ par ha, avec toutefois un ajoût de 10L SI.

Ces expériences ont été établies sur le substrat "sable". Sur des substrats différents, notamment avec une granulométrie différente et / ou en présence de sel, d'autres valeurs généralement plus hautes seraient à considérer.

## Revendications

1. Composition aqueuse pour le traitement d'un substrat de manière à le rendre hydrophobe, **caractérisée en ce qu'**elle comprend un méthylsiliconate de sodium ou de potassium et un silicate de sodium ou de potassium.

2. Composition aqueuse selon la revendication 1, **caractérisée en ce qu'**elle contient une quantité de silicate par rapport au siliconate dans un rapport molaire compris entre 0,5 et 10.

3. Composition selon l'une des revendications 1 ou 2, **caractérisée en ce qu'**elle comprend en outre un colorant et/ou un principe agrochimique.

4. Utilisation de la composition selon l'une des revendications 1 à 3 pour le traitement hydrophobe d'un substrat.

5. Procédé d' hydrophobation d'un substrat choisi dans le groupe constitué par le sable, le gravier, l'écorce d'arbre, la sciure , le compost, le terreau et un matériau poreux solide , **caractérisé en ce qu'**on applique la composition selon l'une des revendications 1 à 3 soit directement sur le substrat, soit indirectement en prétraitant ledit substrat qui sera ensuite déposé sur le sol à traiter.

6. Procédé de traitement selon la revendication 5, **caractérisé en ce qu'**on applique entre 2 et 60 Kg de méthylsiliconate de Na ou de K et entre 2 et 150 Kg de silicate technique de Na ou de K par hectare de sol.

7. Procédé selon la revendicaton 5, **caractérisé en ce qu'**on effectue un prétraitement du substrat en trempant ou en sprayant une solution contenant entre 0,01 et 1 % de méthylsiliconate de Na ou K et entre 0,01 et 5 % de silicate de Na ou K.
